# EUROPEAN PATENT APPLICATION

(11) **EP 1 940 043 A1**
(43) Date of publication of application: **02.07.2008**
(21) Application number: 06026982.6
(22) Date of filing: 28.12.2006
(51) Int. Cl.: H04B 5/00

(54) **Electric power transmission system without conductors**

(71) Applicant: LINEAS Y CABLES, S.A., 28223 Pozuelo de Aragon (Madrid) (ES)
(72) Inventor: Almazan Sanchez, Jesus, 28223 Pozuelo de Alarcon (Madrid) (ES)
(74) Representative: Botella Reyna, Juan

(57) **Abstract**

The system comprises a transmitter module (1) which includes a circuit in which an electromagnetic transducer (9) is established which generates a magnetic flow, supplied by means of a control circuit (4) with the aid of a switch (7) or similar element by means of one or more batteries (5), said magnetic flow is received by an electromagnetic transducer (11) established in the receiver module, so that the magnetic flow induces an electrical current which supplies a control circuit through which the charge (3) in question is supplied. In this way a receiver module is obtained, associated with a charge which does not need a source of supply, and which remains inoperable until it is activated by means of the transmitter module and which does not require any type of maintenance. Both the control circuit of the transmitter module (1) and the receiver module (2) may have the means to codify/decode the signals in case should the system application requirea high degree of security.

## Description

### OBJECT OF THE INVENTION

The present invention refers to a system which has been specially designed to enable the transmission of electric power from a transmitter module to a receiver module, associated with a charge.

The object of the invention is to provide a system by means of which the receiver device through which the aforementioned electrical charge is supplied constitutes a passive element, without batteries or any source of electrical supply, so that the power required for operation will be transmitted through the complementary transmitter module, while remaining inoperable when this is not required, and without any need for permanent maintenance, and which is undetectable when covered by construction materials such as plasterboard, bricks, concrete etc.

The invention therefore forms part of the electrical/electronic sector in that it specifies the start up of a device or system without using the electrical conductors normally used to connect the power generator with the corresponding charge.

### BACKGROUND TO THE INVENTION

There are an infinite number of systems associated with an electrical charge, the supply of which may be activated remotely through a transmitter device, such as for example, remote door opening systems as well as a number of other devices.

This type of device, which involves a transmitter device and a receiver device associated with the charge, the supply of which causes the system or device associated with it to be activated, usually presents problems based on three main areas.

Firstly, it should be pointed out that the receiver device must necessarily be associated with a source of supply in order to operate, which may be provided by a set of batteries, a supply source connected to the electric power network etc. which restricts its possibilities of implementation in places which have no electric power supply, and in other cases the receiver device needs to be accessible for maintenance purposes due to the need of replacing or recharging its batteries.

Another problem of this type of device is that the signal used to activate the supply to the aforementioned charge is electromagnetic, which may be easily disabled by using a frequency inhibitor preventing activation of the corresponding system or device.

Also, due to the fact that it is an electromagnetic signal, its frequency may be easily captured by a scanner, which enables third parties to activate the aforementioned device themselves, resulting in an unsafe system in applications requiring a high degree of security, such as vehicle or building door opening systems, deactivation/activation of security systems etc.

### DESCRIPTION OF THE INVENTION

The system for transmitting electric power without conductors proposed by this invention resolves in a completely satisfactory manner the problem described above in the various aspects mentioned.

Therefore, in a more specific manner, the recommended system consists, as it is conventional and as mentioned previously, of a transmitter module and a receiver module which is associated with the electrical charge to be supplied in a controlled manner.

Therefore, in accordance with the invention, the transmitter model has been designed to consist of a circuit in which an electromagnetic transducer is established which generates a magnetic flow by means of an electrical current supply with the addition of a switch associated with a control circuit which is supplied by one or more batteries.

The receiver module consists of an electromagnetic transducer associated with a control circuit with an outlet connecting to the charge of the device to be activated.

Thus this receiver module does not have its own supply source, remaining inactive until the magnetic flow generated by the receiver induces a current in the electromagnetic transducer of the receiver module which initially supplies its electronic control, so that it becomes operative and proceeds to supply the charge associated with the receiver module through the induced current.

In accordance with another characteristic of the invention it has been envisaged that in cases where the system application requires a high degree of security, the control circuit of the transmitter module has been designed to emit a signal with a specific frequency so that the control circuit of the receiver module has an internal architecture designed only to proceed to the electrical supply of the charge if the frequency of the signal received corresponds to a pre-established operational frequency, and preventing any supply if this is not the case.

In order to further extend the scope of security in system transmissions, both circuits may be optionally programmed with a signal coding/decoding system.

In this way a receiver module is obtained which does not require any kind of maintenance and which therefore can be installed inside a wall or any other concealed space, obviating the need for detection and/or cancellation when inoperative, and the wall in question may be of concrete, bricks, plasterboard or any other diamagnetic material.

When the transmitter is operating, neither electric discharges nor high temperatures are generated, and therefore it may be used in environments where gas leaks may occur, or in the presence of inflammable liquids explosive atmospheres etc.

Finally, it should be mentioned that due to the directionability of the magnetic field generated and its reduced scope, it is impossible for third parties to register it without the transmitter module user being aware of this.

### DESCRIPTION OF THE DRAWINGS

In order to complete the description herein and for the purpose of achieving a greater understanding of the characteristics of the invention in accordance with an example of a preferential practical embodiment thereof, a set of drawings is included as an integral part of said description, which serves as an illustration which is in no way restrictive and which is represented as follows:
Figure 1.- Shows a schematic view of the transmitter module which is part of the electric power transmission system without conductors which is the object of this invention.
Figure 2.- Shows a similar view to figure 1 corresponding to the receiver module.

### PREFERRD EMBODIMENT OF THE INVENTION

Having viewed the aforementioned figures it may be noted how the recommended electric power transmission system includes a transmitter module (1) and a receiver module (2) associated with a charge (3) for the purpose of supplying electric power in a controlled manner through the aforementioned transmitter module (1).

The transmitter module (1) has a control circuit (4) supplied by one or more batteries (5) depending on the power required, that is, the amount of energy and the time it is to be applied to the charge, as well as the physical distance between the transmitter module (1) and the receiver (2) incorporating a converter (6) of continuous current to alternate current for supplying the control circuit (4) which, with the aid of a switch (7) and prior to filtering (8) supplies an electromagnetic transducer (9), such as a coil or similar, so that the current circulating through it induces a magnetic field, the frequency of which will depend on the signal generated by the control circuit (4).

In accordance with the example of the practical embodiment chosen, it has been envisaged that the control circuit (4) will incorporate a code generator (10) which codifies the signal induced in order to increase the degree of security in the system activation.

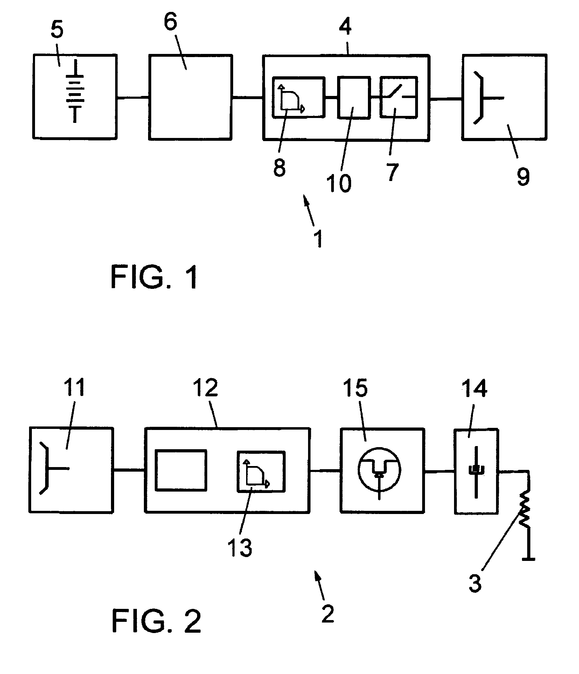

As may be seen in figure 2, the receiver module (2) also has an electromagnetic transducer (11) which, when it receives the magnetic flow generated by the transmitter module (1) induces a current at its outlet which, having adapted to the electronic control levels feeds a control circuit (12) which remained uncharged and therefore inactive, so that when the electronic control of the circuit (12) is activated it verifies that the induced signal is valid, and if so, by means of the induced current, prior to filtering (13-14) and adapting (15) to the required outlet voltage, it supplies electric power to the charge(3).

Thus, as mentioned previously, as the receiver module is a passive device which needs no maintenance it may be concealed beneath any kind of diamagnetic material, with such material barely interfering with the transmission of the magnetic flow, making it ideal for safety applications such as access locks to various premises.

In addition, the transmitter module may be either a portable or fixed element depending on the application for which it is intended to.

## Claims

1. Electric power transmission system without conductors which, being intended to enable transmission of electric power from a transmitter module to a receiver module, **characterised in that** due to the fact that the transmitter module (1) comprises a circuit in which an electromagnetic transducer (9) is established which generates a magnetic flow, the transducer (9) being supplied through a control circuit (4) with the aid of a switch (7) or similar element, and by means of one or more batteries (5) having envisaged that the receiver module (2) will also have an electromagnetic transducer (11) in which a current is induced passing through a control circuit (12) associated therewith and through which an electrical charge (3) is supplied associated with the receiver module.

2. Electric power transmission system without conductors, according to claim 1, **characterised in that** the control circuit (4) of the transmitter module has the means to generate electrical signals at a pre-established frequency, while the control circuit (12) of the receiver module has the means of connecting/disabling the supply of induced current to the charge (3) according to the frequency of the induced current.

3. Electric power transmission system without conductors, according to claim 1, **characterised in that** both the control circuit of the transmitter module (1) and the receiver module (2) have the means to codify/decode the signals.
